# EUROPÄISCHE PATENTSCHRIFT

(11) **EP 1 516 788 B1**
(45) Veröffentlichungstag und Bekanntmachung des Hinweises auf die Patenterteilung: **20.12.2006**
(21) Anmeldenummer: 04020488.5
(22) Anmeldetag: 28.08.2004
(51) Int. Cl.: B60R 22/20

(54) **Höhenversteller für den oberen Umlenkbeschlag von Fahrzeug-Sicherheitsgurten**
Height adjuster for the upper safety belt anchorage of a vehicle
Dispositif de réglage en hauteur du point d'ancrage haut d'une ceinture de sécurité pour véhicule

(30) Priorität: 17.09.2003 DE 20314491 U
(43) Veröffentlichungstag der Anmeldung: 23.03.2005
(73) Patentinhaber: Griesemer, Albert, 57462 Olpe-Biggesee (DE)
(72) Erfinder: Griesemer, Albert, 57462 Olpe-Biggesee (DE)
(74) Vertreter: Grommes, Karl F.

(56) Entgegenhaltungen:
- EP-A- 0 086 633
- DE-A- 10 017 970
- DE-C- 19 500 268

## Beschreibung

### Technisches Gebiet:

Die Erfindung betrifft einen Höhenversteller für den oberen Umlenkbeschlag von Fahrzeug-Sicherheitsgurten, bestehend aus einer Führungsschiene mit einem darin längsverschieblichen Verstellteil, welches den Umlenkbeschlag trägt und über ein mitgeführtes Arretierteil in einer Rastposition in der Führungsschiene gehalten ist, wobei die Rastpositionen durch Ausnehmungen in der Führungsschiene definiert (vorgegeben) sind und jeweils außer einer Rastung (Raststellung) für den Belastungsfall (Crash) eine Vorrastung für den unbelasteten Fall vorgesehen ist, und wobei das Arretierteil mit einer festen Rastnase um einen Lagerzapfen schwenkbar zum Ein- und Ausrasten ausgebildet ist und der festen Rastnase eine elastische Rastnase derart eigenbeweglich vorgelagert ist, dass diese beim Einschwenken des Arretierteils regelmäßig zuerst zum Anschlag an einer Ausnehmung der Führungsschiene zur Festlegung einer gewünschten Rastposition kommt, jedoch bei Überschreiten einer bestimmten Zugkraft nachgibt und ein geringfügiges Nachrücken des Arretierteils erlaubt, bis die feste Rastnase in Eingriff mit der Führungsschiene steht.

Ein derartiger Höhenversteller ist durch die EP 0 086 633 A bekannt. Er verfügt über eine feste Rastnase und eine elastische Rastnase, welche nebeneinander angeordnet sind. Diese Anordnung bringt es mit sich, dass entweder nur die eine oder aber andere Rastnase oder auch keine davon in Richtung der Mittellinie oder Symmetrieachse des Verstellteils bzw. Arretierteils sowie der Führungsschiene verläuft bzw. wirkt. Dies kann zu einer Beeinträchtigung des Bedienungskomforts im Normalbetrieb wie auch der Sicherheit im Belastungsfalle führen.

Bei einem derartigen Höhenversteller kommt es letztlich darauf an, dass er im Belastungsfall (Crash) äußerst zuverlässig ist, d. h. die eingestellte Position hält. Andererseits wird an ihn die Forderung gestellt, dass er sich bequem und mühelos in die jeweils bestmögliche Position eines Benutzers verstellen lässt. Dies bedeutet einerseits, dass ein enger und stabiler Formschluss der zusammenwirkenden Teile im Interesse der Sicherheit gewährleistet sein muss, und andererseits, dass für den Bedienungskomfort doch kein so enger Formschluss gewünscht wird, jedenfalls solange es nur um eine bequeme Verstellbarkeit geht, die ein leichtes Entriegeln gewährleistet - auch mit einer gewissen Vorlast, ausgehend vom Umlenkbeschlag. Somit stehen sich hier zwei Forderungen in einem gewissen Widerspruch gegenüber.

### Darstellung der Erfindung:

Hier setzt nun die Erfindung an. Sie will einen Höhenversteller von bequemer Verstellbarkeit bei gleichzeitig hoher Betriebssicherheit bereitstellen.

Gelöst wird diese Aufgabe bei einem Höhenversteller der in Rede stehenden Art mit den kennzeichnenden Merkmalen von Anspruch 1. Dies bedeutet, dass die elastische Rastnase zwischen einer ersten und einer zweiten festen Rastnase angeordnet ist.

Zweckmäßigerweise sind die elastische Rastnase und die festen Rastnasen getrennten Bauteilen zugeordnet, welche eine Montageeinheit bilden. - Diese erlaubt die Wahl unterschiedlicher Werkstoffe für die einzelnen Bauteile und die Herstellung nach den jeweils günstigsten Verfahren. Dabei kann eine gegenseitige Anpassung erfolgen, um so eine leicht handhabbare Montageeinheit zu bilden.

Vorteilhaft gehört die elastische Rastnase zu einem mittleren oder inneren Bauteil, welches in ein komplementäres Bauteil mit den festen Rastnasen einsetzbar ist. In weiterer Ausgestaltung sind die Bauteile mit der elastischen Rastnase und den festen Rastnasen miteinander verclipbar.

Als besonders komfortabel und wirksam kann eine Ausführungsform angesehen werden, bei der die elastische Rastnase von einem biegsamen Anschlagteil gebildet ist, das in die Ausnehmungen gerichtet ist und an das sich ein Fortsatz mit freiem Ende in Verschieberichtung anschließt. - Der Fortsatz kann im übrigen noch besonders geformt, insbesondere gewellt sein.

Zweckmäßigerweise besteht das Bauteil mit der elastischen Rastnase aus Kunststoff und das Bauteil mit den festen Rastnasen aus Metall. - Das Bauteil aus Kunststoff kann insbesondere ein Spritzgußteil sein.

Um eine selbständige Vorrastung zu erreichen, wirkt auf das Arretierteil im Abstand vom Lagerzapfen ein Kraftelement, insbesondere eine Feder ein. Dadurch wird ein Drehmoment erzeugt, welches auch den Betätigungsmechanismus (Verstellhebel) unter eine gewisse Vorspannung setzt.

Welches Entriegelungsmoment letztlich aufgebracht werden muss, hängt auch von der Ausformung der elastischen Rastnase ab. Damit auch unter Vorlast ein niedriges Entriegelungsmoment ausreicht, kann die Rastfläche in etwa als Kreissegment oder einer danach ausgerichteten Tangente ausgebildet sein.

Allgemein gilt, dass die Erfindung den vorgeschlagenen unterschiedlichen Rastnasen jeweils schwerpunktmäßig unterschiedliche Funktionen zuweist, nämlich eine bequeme (gutgängige) und geräuscharme (spielfreie) Verstellfunktion der elastischen Rastnase sowie eine absolut zuverlässige Absicherung der starren Rastnasen, wozu diese von Anfang an funktionsbereit zur Verfügung stehen und ohne eine Änderung jederzeit volltauglich zum Einsatz gelangen können. Der Erfindungsgedanke ist im übrigen an unterschiedlichen Führungssschienen realisierbar. Wird das Arretierteil aus unterschiedlichen Bauteilen und Materialien aufgebaut, so läßt sich damit auch gleichzeitig Einfluß auf einen gegebenenfalls notwendigen Massenausgleich in vertikaler oder horizontaler Richtung nehmen.

### Kurze Beschreibung der Zeichnungen:

Weitere Einzelheiten und Vorteile werden anhand der schematischen Zeichnungen für zwei bevorzugte Ausführungsbeispiele beschrieben. Darin zeigen:
- Figur 1: einen Höhenversteller im Längsschnitt,
- Figur 2: den Gegenstand von Figur 1 in Draufsicht,
- Figur 3: das Arretierteil von Figur 1 und 2 vor dem Zusammenfügen seiner Bestandteile in perspektivischer Ansicht,
- Figur 4: den vergrößerten Abschnitt eines anderen Höhenverstellers im Längsschnitt,
- Figur 5: den Gegenstand von Figur 4 im Querschnitt entlang der Linie V - V und
- Figur 6: das Arretierteil von Figur 4 und 5 vor dem Zusammenfügen seiner Bestandteile in perspektivischer Ansicht.

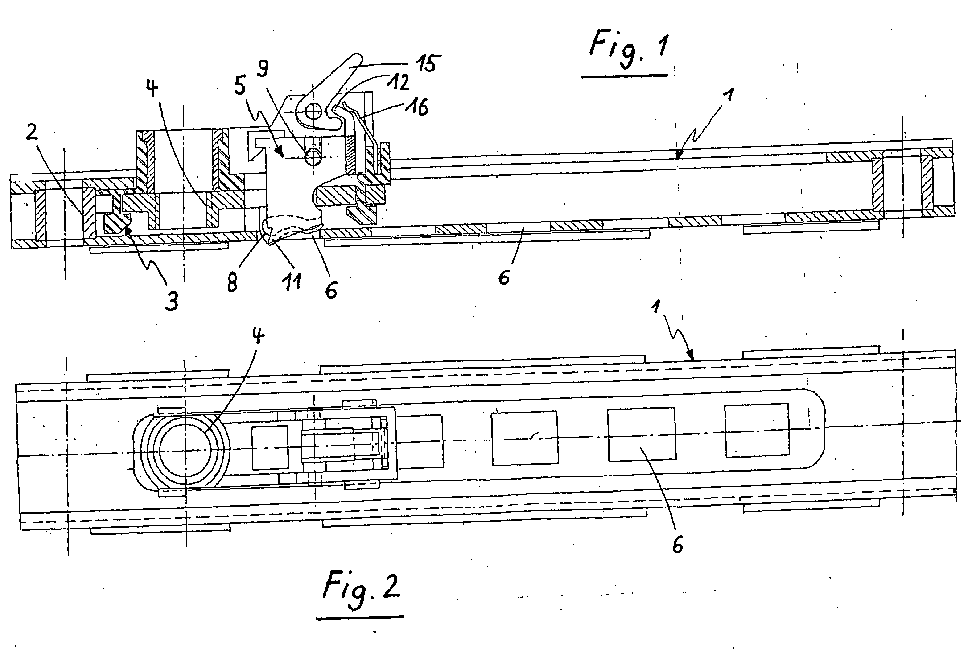

Nach den Figuren 1 - 3 ist eine Führungsschiene 1 mit Befestigungsöffnungen 2 zur Anbringung in einem Fahrzeug versehen. Zwischen den Befestigungsöffnungen 2 ist ein Verstellteil 3 längsverschieblich angeordnet. Es besitzt eine Anschlußbuchse 4 für einen (hier nicht dargestellten) Umlenkbeschlag und führt ein Arretierteil 5 mit sich, womit es in einer gewünschten Rastposition festgesetzt werden kann. Die Rastpositionen sind durch Ausnehmungen 6 in der Führungsschiene 1 vorgegeben, worin das Arretierteil 5 eingreifen kann.

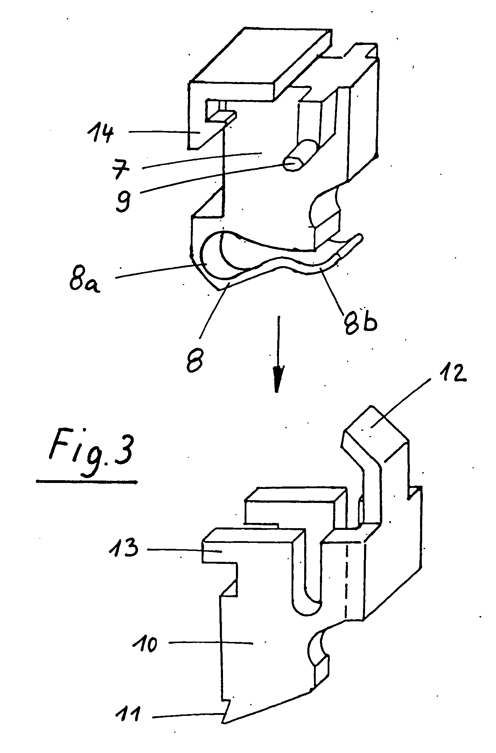

Dazu ist das Arretierteil 5 wie folgt ausgebildet (vgl. Figur 3). Es umfaßt zunächst ein mittleres oder inneres Bauteil 7 mit einer elastischen Rastnase 8, welche über ein Anschlagteil 8a sowie einen gewellten Fortsatz 8b verfügt. Das Bauteil 7 besteht aus Kunststoff und weist einen seitlich überstehenden Lagerzapfen 9 auf. Das gesamte Bauteil 7 ist in ein komplementäres Bauteil 10 mit zwei festen Rastnasen 11 einsetzbar, und zwar so, dass die elastische Rastnase 8 von den festen Rastnasen 11 flankiert wird. Das Bauteil 10 besteht aus Metall und weist im übrigen einen nach oben überstehenden Bügel 12 auf. Es besitzt ferner freigesetzte obere Endabschnitte 13, welche mit angeschrägten Klammern 14 am oberen Ende des Bauteils 7 jeweils eine Clipverbindung bilden.

Wie aus Figur 2 ersichtlich, ist das Arretierteil 5 um seinen Lagerzapfen 9 dreh- oder schwenkbar, wozu es mittels eines Verstellhebels 15 über seinen Bügel 12 betätigt werden kann. Letzterer steht unter der Wirkung einer Blattfeder 16, welche die Aufgabe hat, das Arretierteil 5 ohne sonstige Krafteinwirkung in der gezeigten Lage zu halten. Bei dieser Lage schlägt die elastische Rastnase 8 mit ihrem Anschlagteil 8a am Innenrand der Ausnehmung 6 an, während ihr Fortsatz 8b am gegenüberliegenden Rand innenseitig aufliegt.

In geringfügigem Abstand hinter dem Anschlagteil 8a befindet sich eine starre Rastnase 11. Diese ist noch außer Eingriff und bleibt es auch solange, wie es sich um einen üblichen unbelasteten Zustand handelt. Kommt es dagegen zum Crash, gibt die elastische Rastnase 8 nach und kann sich das Verstellteil 3 mitsamt dem Arretierteil 5 noch geringfügig in Längsrichtung verschieben, bis die feste Rastnase 11 bzw. im vorliegenden Fall die beiden festen Rastnasen 11 in Eingriff mit der Ausnehmung 6 stehen. Damit ist dann die Rastposition bestmöglich gesichert.

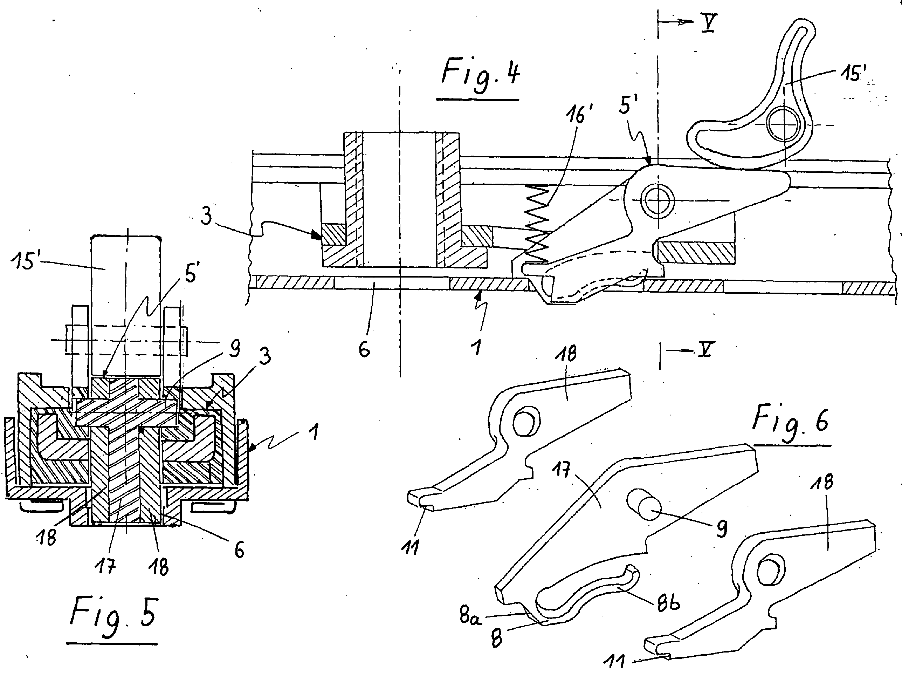

Die Figuren 4 - 6 zeigen eine etwas andere Ausführungsform eines Arretierteils 5', wobei sich dieses jetzt aus einem mittleren Bauteil 17 mit elastischer Rastnase 8 und seitlichen Bauteilen 18 mit fester Rastnase 11 zusammensetzt. Das Arretierteil 5' ist wiederum um den Lagerzapfen 9 schwenkbar. Die Betätigung erfolgt über einen Verstellhebel 15' entgegen der Kraft einer Druckfeder 16', welche die Aufgabe hat, das Arretierteil 5' in Rastposition zu halten. Die alternative Wirkung von elastischer Rastnase 8 und fester Rastnase 11 erschließt sich ohne weiteres aus der vergrößerten Darstellung der Figur 4, insbesondere wenn man die auch hierfür geltenden Erläuterungen zu dem vorangegangenen Ausführungsbeispiel beachtet. Selbstverständlich ist die Erfindung nicht auf die hier gezeigten Ausführungsbeispiele beschränkt, sondern lässt sich auch noch in vielfältiger anderer Form verwirklichen.

### Bezugszeichenliste

- 1: Führungsschiene
- 2: Befestigungsöffnung
- 3: Verstellteil
- 4: Anschlußbuchse
- 5: Arretierteil
- 5': Arretierteil
- 6: Ausnehmung
- 7: inneres Bauteil
- 8: elastische Rastnase
- 8a: Anschlagteil
- 8b: Fortsatz
- 9: Lagerzapfen
- 10: komplementäres Bauteil
- 11: feste Rastnase
- 12: Bügel
- 13: Endabschnitt
- 14: Klammer
- 15: Verstellhebel
- 15': Verstellhebel
- 16: Blattfeder
- 16': Druckfeder
- 17: inneres Bauteil
- 18: seitliches Bauteil

## Patentansprüche

1. Höhenversteller für den oberen Umlenkbeschlag von Fahrzeug-Sicherheitsgurten, bestehend aus einer Führungsschiene mit einem darin längsverschieblichen Verstellteil, welches den Umlenkbeschlag trägt und über ein mitgeführtes Arretierteil in einer Rastposition in der Führungsschiene gehalten ist, wobei die Rastpositionen durch Ausnehmungen der Führungsschiene definiert sind und jeweils außer einer Rastung für den Belastungsfall (Crash) eine Vorrastung für den unbelasteten Fall vorgesehen ist, und wobei das Arretierteil (5,5') mit einer festen Rastnase (11) um einen Lagerzapfen (9) schwenkbar zum Ein- und Ausrasten ausgebildet ist und der festen Rastnase (11) eine elastische Rastnase (8) derart eigenbeweglich vorgelagert ist, dass diese beim Einschwenken des Arretierteils (5, 5') regelmäßig zuerst zum Anschlag an einer Ausnehmung (6) der Führungsschiene (1) zur Festlegung einer gewünschten Rastposition kommt, jedoch bei Überschreiben einer bestimmten Zugkraft nachgibt und ein geringfügiges Nachrücken des Arretierteils (5, 5') erlaubt, bis die feste Rastnase (11) in Eingriff mit der Führungsschiene (1) steht, **dadurch gekennzeichnet, dass** die elastische Rastnase (8) zwischen einer ersten und einer zweiten festen Rastnase (11) angeordnet ist.

2. Höhenversteller nach Anspruch 1, **dadurch gekennzeichnet, dass** die elastische Rastnase (8) und die festen Rastnasen (11) getrennten Bauteilen (7, 17; 10, 18) zugeordnet sind, welche eine Montageeinheit bilden.

3. Höhenversteller nach Anspruch 1 oder 2, **dadurch gekennzeichnet, dass** die elastische Rastnase (8) zu einem mittleren oder inneren Bauteil (7) gehört, welches in ein komplementäres Bauteil (10) mit den festen Rastnasen (11) einsetzbar ist.

4. Höhenversteller nach einem der Ansprüche 1-3, **dadurch gekennzeichnet, dass** die Bauteile (7, 10) mit der elastischen Rastnase (8) und den festen Rastnasen (11) miteinander verclipbar sind.

5. Höhenversteller nach einem der Ansprüche 1-4, **dadurch gekennzeichnet, dass** die elastische Rastnase (8) von einem biegsamen Anschlagteil (8a) gebildet ist, das in die Ausnehmungen (6) gerichtet ist und an das sich ein Fortsatz (8b) mit freiem Ende in Verschieberichtung anschließt.

6. Höhenversteller nach einem der Ansprüche 1-5, **dadurch gekennzeichnet, dass** die Bauteile (7, 17) mit der elastischen Rastnase (8) aus Kunststoff und die Bauteile (10, 18) mit den festen Rastnasen (11) aus Metall bestehen.

## Claims

1. Height adjuster for the upper deflection fitting of vehicle seat belts, consisting of a guide rail with an adjuster part which carries the deflection fitting and is longitudinally displaceable in the guide rail and is held in a catch position in the guide rail by a locking part which the adjuster part also carries, wherein the catch positions are defined by cutouts in the guide rail and in each of these an initial engagement for the no-load case is provided in addition to full enagement for the loaded (crash) case and wherein the locking part (5, 5'), formed with a solid latch-neb (11), is pivotable about a pivot-pin (9)for engagement and disengagement and an elastic latch-neb (8), independently movable, is mounted in front of the solid latch-neb (11) so that when the locking part (5, 5') pivots into engagement the elastic latch-neb (8) normally first latches on a cutout (6) in the guide rail (1) to adopt a desired catch position, but if a specified tension is [exceeded], resiles and allows the locking part (5, 5') to advance slightly until the solid latch-neb (11) is in engagement with the guide rail (1), **characterised in that** the elastic latch-neb (8) is arranged between first and second solid latch-nebs (11).

2. Height adjuster according to claim 1, **characterised in that** the elastic latch-neb (8) and the solid latch-nebs (11) are on separate components (7, 17, 10, 18) which together make up a sub-assembly.

3. Height adjuster according to claim 1 or claim 2, **characterised in that** the elastic latch-neb (8) belongs to a central or inner component (7) which is insertable into a mating component (10) that carries the solid latch-nebs (11).

4. Height adjuster according to any one of claims 1-3, **characterised in that** the components (7, 10) with the elastic latch-neb (8) and the solid latch-nebs (11) can be clipped together.

5. Height adjuster according to any one of claims 1-4, **characterised in that** the elastic latch-neb (8) is formed from a flexible stop part (8a) which is directed into the cutouts (6) and is ajoined by an extension (8b) with a free end in the direction of displacement.

6. Height adjuster according to any one of claims 1-5, **characterised in that** the components (7, 17) with the elastic latch-neb (8) are made of plastic material and the components (10, 18) with the solid latch-nebs (11) are made of metal.

## Revendications

1. Dispositif de réglage en hauteur du point d'ancrage haut de ceintures de sécurité pour véhicule, composé d'une glissière de guidage avec une partie de manoeuvre, mobile longitudinalement à l'intérieur, portant le point d'ancrage et maintenue dans la glissière de guidage à une position d'encliquetage par l'intermédiaire d'une partie de blocage entraînée, les positions d'encliquetage étant définies par des évidements de la glissière de guidage et, chaque fois étant prévu, outre un encliquetage pour le cas de sollicitation (collision), un pré-encliquetage pour le cas non sollicité, la partie de blocage (5,5') étant réalisée avec un ergot d'encliquetage (11) rigide, de manière à pouvoir pivoter autour d'un tourillon de palier (9) pour produire l'encliquetage et le désencliquetage et, devant l'ergot d'encliquetage (11) rigide, étant monté un ergot d'encliquetage (8) élastique avec une mobilité propre, de manière que celui-ci, lors de la pénétration par pivotement de la partie d'encliquetage (5,5'), en règle générale vienne d'abord en butée sur un évidement (6) de la glissière de guidage (1), pour la fixation d'une position d'encliquetage souhaitée, mais que, cependant, en cas de dépassement d'une force de traction déterminée, il se déforme et permette un léger rattrapage du bras de la partie de blocage (5,5'), jusqu'à ce que l'ergot d'encliquetage (11) rigide vienne en prise avec la glissière de guidage (1), **caractérisé en ce que** l'ergot d'encliquetage (8) élastique est disposé entre un premier et un deuxième ergots d'encliquetage (11) rigides.

2. Dispositif de réglage en hauteur selon la revendication 1, **caractérisé en ce que** l'ergot d'encliquetage (8) élastique et les ergots d'encliquetage (11) rigides sont associés à des composants (7, 17 ; 10, 18) séparés, formant une unité de montage.

3. Dispositif de réglage en hauteur selon la revendication 1 ou 2, **caractérisé en ce que** l'ergot d'encliquetage (8) élastique appartient à un composant (7) médian ou interne, pouvant être introduit dans un composant (10) complémentaire, comprenant les ergots d'encliquetage (11) rigides.

4. Dispositif de réglage en hauteur selon l'une des revendications 1 à 3, **caractérisé en ce que** les composants (7, 10), avec l'ergot d'encliquetage (8) élastique et les ergots d'encliquetage (11) rigides, sont encliquetables ensemble.

5. Dispositif de réglage en hauteur selon l'une des revendications 1 à 4, **caractérisé en ce que** l'ergot d'encliquetage (8) élastique est formé par une partie de butée (8a) flexible, orientée pour pénétrer dans les évidements (6) et à laquelle se raccorde un prolongement (8b), ayant une extrémité libre orientée dans la direction de déplacement.

6. Dispositif de réglage en hauteur selon l'une des revendications 1 à 5, **caractérisé en ce que** les composants (7, 17) avec l'ergot d'encliquetage (8) élastique sont formés de matière synthétique, et les composants (10, 18) avec les ergots d'encliquetage (11) rigides sont formés de métal.
